# EUROPEAN PATENT APPLICATION

(11) **EP 3 333 487 A2**
(43) Date of publication of application: **13.06.2018**
(21) Application number: 17205770.5
(22) Date of filing: 06.12.2017
(51) Int. Cl.: F24B 1/22, F24B 5/02, F24B 7/04, F24B 13/00

(54) **WOOD-BURNING APPLIANCE**

(30) Priority: 07.12.2016 US 201662431099 P
(71) Applicant: Oviatt, William T., Lander, WY 82520 (US)
(72) Inventor: Oviatt, William T., Lander, WY 82520 (US)
(74) Representative: Markieta, Jaroslaw Franciszek

(57) **Abstract**

The disclosure relates to a wood-burning appliance. The wood-burning appliance comprises a firebox and an airflow apparatus configured to provide a supply of oxygen for efficient primary and secondary fuel combustion within the firebox. An oven may be positioned above the firebox to improve heat exchange from exhaust exiting the wood-burning appliance. The wood-burning appliance may further have a pulley system for operation of a door that reduces gasket wear and allows the door to be at least partially removed from the wood-burning appliance for ease of access and maintenance.

## Description

### CROSS REFERENCE APPLICATIONS

This application is a non-provisional application claiming the benefits of provisional application no. 62/431,099 filed December 7, 2016, which is hereby incorporated by reference for all purposes.

### BACKGROUND

As an alternative to traditional structural chimneys, wood-burning stove appliances allow users to bring the experience of a fire indoors. In such appliances, incoming airflow enters the stove through some intake pathway, and oxygen in the air is then used in the firebox for a fuel combustion reaction before exiting out an exhaust pathway into the outdoor environment. Complete combustion produces heat, light, steam, and carbon dioxide. However, absent a sufficient supply of oxygen, incomplete combustion of wood releases a large amount of smoke and pollutants. As a general rule, the warmer the airflow intake air is when it reaches the combustion chamber, with more energy for use in combustion, the more efficient the burn is compared to colder air in wood-burning appliances. Therefore, it is advantageous to preheat incoming airflow to the firebox of a stove. On the other hand, the lower density of warmer air means less oxygen, so an efficient wood-burning appliance should provide effective airflow pathways to ensure adequate oxygen levels are provided for the burn. Nonetheless, many traditional stoves only comprise a single airflow pathway providing a limited supply of oxygen to the initial burn site, resulting in incomplete combustion. Due to environmental and health concerns, modern trends and government regulations continuously push for improvement over known designs to increase combustion efficiency of wood-burning appliances and reduce emissions therefrom. For instance, regulations have previously limited particulate emissions to 4.5 grams per hour for catalytic, non-catalytic, and pellet stoves. However, recent proposals would further reduce the acceptable limit for wood-burning appliances to 2.0 grams per hour.

In addition to environmental concerns, many traditional wood-burning appliances provide an inefficient transfer of heat generated in the firebox to the surrounding area. Instead, a substantial amount of heat is carried by the exhaust exiting the flue into the outside environment. Not only is that heat lost for the purposes of heating the indoor area surrounding the stove, but the flue and building components connected therewith risk overheating and incurring potential damage at high exhaust temperatures, which have been known to reach well over 1000°F. This may also increase the risk of environmental fire hazard.

Moreover, some wood-burning appliances have a glass door or wall to allow viewers to observe the fuel burning in the firebox, thereby creating ambience and informing observers of the status of the burn. However, glass is susceptible to overheating and becoming dirty from the deposit of byproducts produced in pyrolysis/combustion. In such cases, increased maintenance may be required and the overall viewing experience diminished. Further, the repeated opening and closing of a door may cause damage to seals between the door and stove, thereby decreasing the lifetime expectancy of the seals and increasing the risk that noxious gases are released into the building.

The foregoing examples of the related art and limitations therewith are intended to be illustrative and not exclusive. Other limitations of the related art will become apparent to those of skill in the art upon a reading of the specification and a study of the drawings.

### SUMMARY

The following embodiments and aspects thereof are described and illustrated in conjunction with systems, tools and methods which are meant to be exemplary and illustrative, not limiting in scope. In various embodiments, one or more of the above described problems have been reduced or eliminated, while other embodiments are directed to other improvements.

The present disclosure relates to a non-catalytic wood-burning appliance. One aspect of the present disclosure is to provide a wood-burning appliance with an emission rate substantially less than 4.5 grams per hour. Another aspect of the present disclosure is to provide a wood-burning appliance that approaches complete combustion of fuel therein when in operation. A further aspect of the present disclosure is to substantially reduce the temperature of exhaust exiting the flue of the wood-burning apparatus. A further aspect of the present disclosure is to improve heat exchange between a wood-burning apparatus and its surrounding indoor environment. A further aspect of the present disclosure is to provide a pulley system for a door of the wood-burning appliance to allow for improved operation of the door and a longer expected lifetime for airtight seals between the door and the stove. A further aspect of the present disclosure is to provide a pulley system for a door that is configured to facilitate easy access to the inside of the door, the interior of the firebox, and any components therein for maintenance.

In one embodiment, a stove of the wood-burning appliance comprises a firebox for the combustion of fuel, an oven positioned above the firebox, a flue for exhaust, and a door for access to the interior of the firebox. An outer frame may be provided to at least partially surround or encompass the stove. The firebox has a front side and a back side, and the back side may an inner wall and an outer wall such that a gap is formed between the inner wall and the outer wall. An air intake may be positioned on the outer wall to receive an incoming airflow and the gap be configured to preheat the incoming airflow. Further, an airflow apparatus is positioned inside the firebox. The airflow apparatus may comprise a plurality of tubes oriented to at least partially extend between the front side and the back side of the firebox. The plurality of tubes are hollow and in aerodynamic communication with a gap in the stove wall providing preheated airflow. Each of the plurality of tubes may also have a plurality of apertures. The plurality of tubes may also extend in aerodynamic communication between a front plenum and a back plenum. A first plate of the airflow apparatus may form the back plenum to receive incoming airflow through the stove wall, and a second plate may form the front plenum. In that sense, the plurality of hollow tubes may extend between the first plate and the second plate of the airflow apparatus and be oriented to at least partially extend between the front side and the back side of the firebox.

The airflow apparatus may further comprise an airwash component configured for aerodynamic communication with the gap and the front side of the firebox, and at least partially positioned within one of the plurality of tubes. In some embodiments, the airwash component comprises a hollow primary airwash tube and a hollow compartment in aerodynamic communication with each other, wherein the primary airwash tube is positioned at least partially within a center tube of the plurality of tubes and is configured to receive incoming airflow through the stove, and the compartment has at least one opening configured for aerodynamic communication with the front side of the firebox.

In another embodiment, the airflow apparatus is positioned within the top portion of the firebox and has an inverted V shape configuration. A center tube of the plurality of tubes of the airflow apparatus may be at the apex and positioned beneath a slot at least partially extending between a front side and back side of the firebox for exiting exhaust. One or more baffle plates may be positioned above such an airflow apparatus in the firebox to direct exhaust out of the firebox through the slot positioned above the center tube of the plurality of tubes. In embodiments having an oven above the firebox, there may at least one oven exhaust cavity formed between the oven chamber wall and the outer stove walls positioned above the baffle plates, which provides aerodynamic communication between the firebox and the flue.

In certain embodiments, the airwash component of the airflow apparatus provides airflow carrying oxygen to the firebox for a primary combustion of fuel through its one or more openings positioned for aerodynamic communication with the front side of the firebox. Therefore, a primary-combustion airflow pathway through the wood-burning appliance may comprise air first entering an air intake formed on the outer wall of the stove, then traveling through a gap formed between an inner wall of the firebox and the outer wall of the stove, then traveling through the airwash component of the airflow apparatus across the firebox to a first and/or front side of the firebox (e.g., through the airwash tube and compartment), then traveling out one or more openings of the airwash component into the firebox, where the air being relatively less dense than the hotter air in the firebox descends to a primary combustion reaction site in the firebox. The plurality of tubes of the airflow apparatus may likewise provide airflow carrying oxygen through their plurality of apertures for a secondary combustion of fuel/exhaust rising through the firebox. Therefore, a secondary-combustion airflow pathway through the wood-burning appliance may comprise air first entering an air intake formed on the outer wall of the stove, then traveling through a gap formed between an inner wall of the firebox and the outer wall of the stove, then into a back plenum of the airflow apparatus before entering the plurality of tubes, then traveling through the plurality of tubes and eventually through the plurality of apertures positioned thereon, at which point oxygen in the air may be consumed in a secondary combustion reaction of incompletely-combusted fuel particulates rising through the firebox. In some embodiments, the exhaust from both airflow pathways then continues rising up after combustion through a slot formed between angled baffles plates positioned above the airflow apparatus, then into an oven exhaust cavity formed around the oven chamber in the stove wall, and finally out the flue located at the top of the stove. Increasing temperature within the firebox from fuel combustion set the pathways in motion thereby automatically drawing airflow into the wood-burning appliance.

In a further embodiment, a pulley system configured to open and close a door of the wood-burning appliance is provided on the side wall of the stove. The door may be a glass door and be positioned at the front side of the firebox to enclose that side of the firebox, such that airflow exiting through the airwash component washes down over the inside of the door when in use. The pulley system may comprise a weight; a cable having a first end coupled to the door and a second end coupled to the weight; a first arm and a second arm pivotally mounted on a side wall of the stove, the first arm coupled to the door; and a plurality of wheels supporting the cable, at least one of the plurality of wheels positioned on each of the first arm, the second arm, and the side wall of the stove. The bottom edge of the door may be configured to extend away from the stove (e.g. front side of the firebox) via pivoting of the first arm when the door is lifted between a closed position and an open position and vice versa. Further, the first arm may be constructed to allow a further extension of its length away from the stove when the door is pulled outward by a user. The top of the door may be coupled within a sliding track located on the side wall of the stove for vertical movement. When the first arm is further extended, a user may lift the top of the door out of the sliding track and lay the door on the hearth in front of the wood-burning appliance, thereby facilitating easier access to and maintenance of the inside of the door, the interior of the firebox, and any components configured therein (e.g., an airflow apparatus).

In addition to the aspects and embodiments described above, further aspects and embodiments will become apparent by reference to the accompanying drawings forming a part of this specification.

### BRIEF DESCRIPTION OF THE DRAWINGS

Embodiments of the present disclosure for a wood-burning appliance are further described herein with reference to the following figures:
FIG. 1 shows a perspective front view of a stove for a wood-burning appliance;
FIG. 2 shows a perspective back view of the stove of FIG. 1;
FIG. 3 shows a partial cross-sectional side view of the firebox of FIG. 1 along its center axis;
FIG. 4 shows a front perspective view of the stove of FIG. 1 with elements omitted to show an airflow apparatus positioned therein;
FIG. 5 shows a perspective view of an airflow apparatus;
FIG. 6 shows a bottom view of the airflow apparatus of FIG. 5;
FIG. 7 shows a cross-sectional side view of the airflow apparatus of FIG. 5 taken along plane I of FIG. 6;
FIG. 8 shows a cross-sectional view of a center tube of the airflow apparatus of FIG. 5;
FIG. 9 shows a partial front view of a stove with no airwash component;
FIG. 10 shows a partial front view of the stove of FIG. 9 with an airwash component partially inserted;
FIG. 11 shows the partial front view of FIG. 10 with the airwash component fully inserted, and with the oven bottom and baffle plates omitted;
FIG. 12 shows a front perspective view of an airwash component;
FIG. 13 shows a side cross-sectional view of the airwash component of FIG. 12;
FIG. 14 shows the partial front view of FIG. 11 with baffle plates;
FIG. 15 shows a partial cross-sectional front view of a stove along its center axis;
FIG. 16 shows an embodiment of a wood-burning appliance comprising a stove and an outer frame;
FIG. 17 shows a side view of pulley system for a door of a stove in a closed position;
FIG. 18 shows the side view of the pulley system of FIG. 17 in transition;
FIG. 19 shows the side view of the pulley system of FIG. 17 in an open position;
FIG. 20 shows the view of FIG. 18 with a first arm further extended; and
FIG. 21 shows a top of the door of FIG. 17 dismounted from the stove.

Before explaining the selected embodiments, it is to be understood that the present disclosure is not limited in application to the details of the particular arrangements shown and is capable of other embodiments. While certain embodiments are illustrated in reference to the figures, it is intended that the embodiments and figures disclosed herein are to be considered illustrative rather than limiting. Also, the terminology used herein is for the purpose of description and not of limitation.

### DETAILED DESCRIPTION

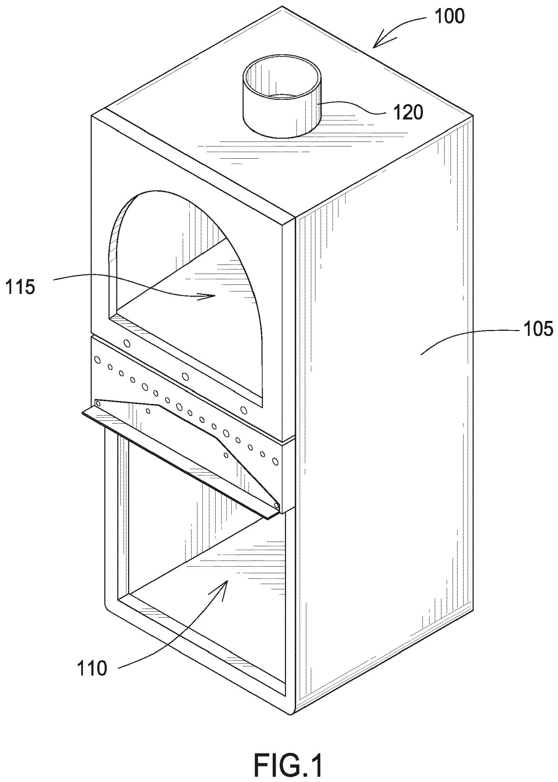

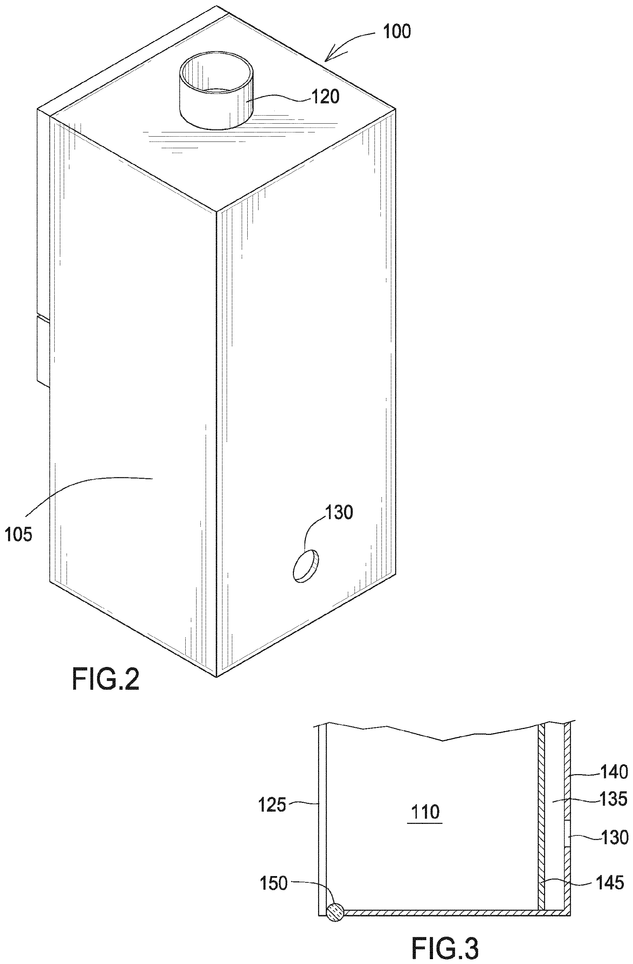

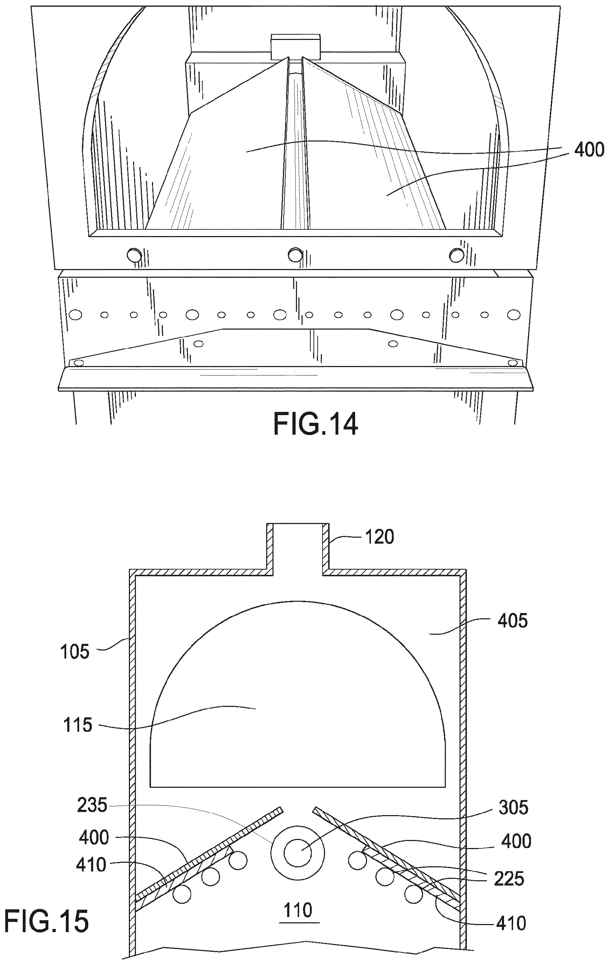

FIGS. 1-3 show a wood-burning appliance 100 according to the present disclosure. In the depicted embodiment, the stove 105 comprises a lower chamber or firebox 110, an upper chamber or oven 115, and an outlet or flue 120 (also referred to as a top collar or chimney) to allow smoke and other particles to exit the stove 105. The firebox 110 is where fuel (e.g., wood) is placed and subsequently burned during use. Of course, one may burn other materials in the firebox other than wood (e.g., wood-derived biomass), but for the purposes of concise description, wood is referred to as the selected fuel herein. No limitation of the fuel that can be used in the appliance is intended, or should be inferred. The oven 115 acts as a heat exchanger to improve the transfer of heat generated by combustion in the firebox to the indoor areas surrounding the stove, as described below in more detail. This in turn decreases the temperature of the exhaust exiting the stove, thereby decreasing the risks of overheating and potential damage to the flue 120 and any structural components attached thereto, as well as environmental fire hazard. The oven 115 may also be used for additional purposes that benefit from the utilization of heat generated in the firebox (e.g., food preparation). It is further possible to omit the oven altogether, whereby exhaust from the firebox exits directly into the flue, but the improved heat exchange function of the oven is not realized in such embodiments. One skilled in the art will recognize that there are many ways to complete the airflow pathway between the stove outlet and an outside environment (e.g., through the roof of a house), so no further description or depiction of that aspect is provided herein. A door 125 (see FIG. 15) is provided on the front of the stove 105. In the depicted embodiment, the door 125 is made of glass to allow for viewing of the interior of the firebox 110. Of course, the door may be made of any suitable material that can withstand the heat generated in the firebox, and may be made of an opaque material if desired (e.g., metal). One or more gaskets 150 may be positioned to provide an airtight seal between the edges of the door and the firebox, as seen for example in FIG. 3 with respect to the bottom edge of the door. It should be understood that the wood-burning appliance 100, and all components thereof, may be made from any suitable material capable of withstanding the high temperatures generated, metal being commonly used. The back of stove 105 may further comprise an air intake 130 positioned near its base on a side opposite the door, as shown in FIG. 2. The air intake 130 may take any appropriate form of an opening that allows for incoming airflow to enter the wood-burning appliance 100 from the surrounding environment. A filtering structure such as a grate (not shown) may be configured over the air intake 130 to prevent unwanted foreign objects from entering the air intake. No adjustment of the airflow entering the air intake is necessary during operation of the wood-burning appliance. As illustrated in FIG. 3, the back portion of the stove 105 may have a gap 135 formed by an outer wall 140 and an inner wall 145 of the stove, where the air intake 130 is positioned on the outer wall 140 to allow aerodynamic communication between the outside environment and the gap 135.

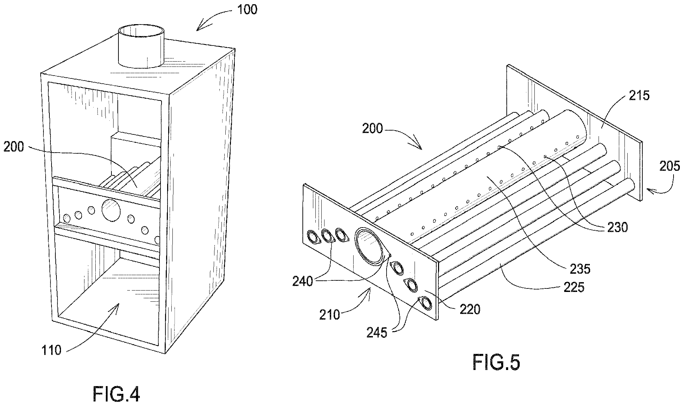

FIG. 4 shows an embodiment of an airflow apparatus for a wood-burning appliance according to the present disclosure, with structures of the stove omitted to better view the airflow apparatus positioned therein. As previously described, incoming airflow first enters the airflow pathway through the stove via the air intake 130 located in the outer wall 140. If the firebox is in use (e.g., it is burning wood), the airflow will first be preheated while in the gap 135 by heat radiating from the inner wall 145, as well as from the outer wall 140 to a lesser extent. This preheated air may then enter an airflow apparatus 200 positioned within the firebox 110. In the embodiment of FIGS. 5-7, the airflow apparatus 200 comprises two plates 215, 220 and a plurality of tubes 225 positioned between the plates. On a side opposite the plurality of tubes, each plate may be defined as having an air plenum 205, 210. The first or back plenum 205 is in aerodynamic communication with the gap 135 of the stove wall. In this way, the back plenum 205 is configured to receive the preheated incoming airflow. It should be appreciated that any number of arrangements are possible to form the first or back plate 215 and back plenum 205 and, likewise, for how back plenum 205 aerodynamically communicates with gap 135. For instance, the side of back plenum 205 opposite from back plate 215 may be completely or partially open to gap 135. If completely open, back plenum 205 and gap 135 form a continuous cavity. If partially open, an incomplete division may be accomplished by a continuation of inner wall 145 or another component of the airflow apparatus, such as by an enclosing extension of back plate 215 for example. If partially open, one or more openings allowing for aerodynamic communication between back plenum 205 and gap 135 may be provided. The second or front plate 220 may be flat, as shown, or comprise extensions that define one or more sides of the second or front plenum 210. Front plenum 210 and front plate 220 are configured to receive an airwash component (described in more detail below). In this way, front plenum 210 functions primarily for pressure equalization rather than as an airflow pathway to the burn site of the firebox 110.

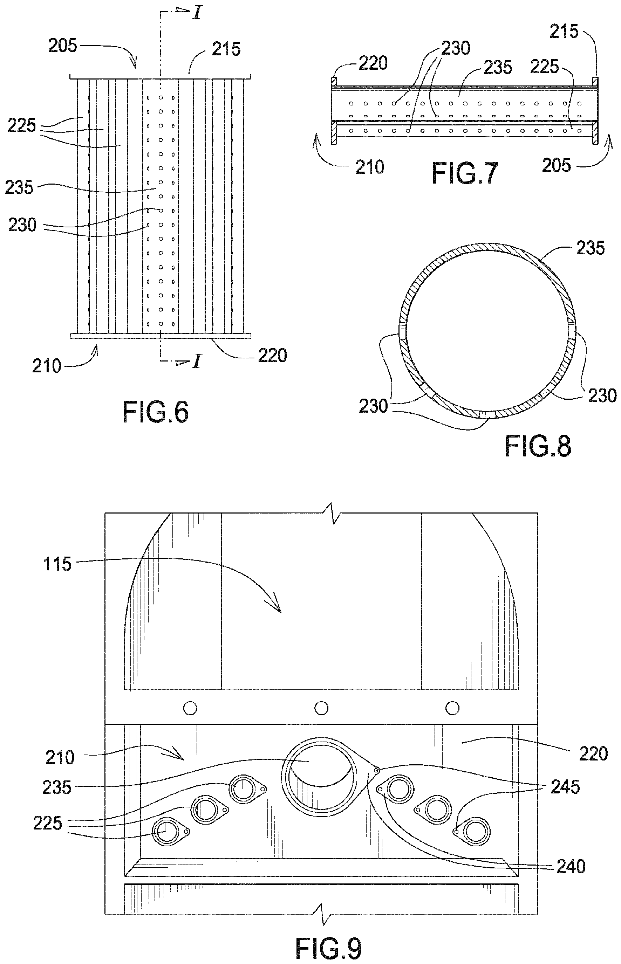

As seen in FIGS. 5-7, the plurality of hollow tubes 225 are extend between the back plenum 205 and front plenum 210, such that the hollow portions of the tubes 225 extend through plates 215, 220 into the plenums. Therefore, the tubes 225 allow for aerodynamic communication between the plenums 205, 210. This in turn provides for equalization of pressure both across the length of a single air tube as well as between the plurality of tubes 225. In the depicted embodiment, the plurality of tubes are generally configured in an inverted V shape, having a center tube 235 at the apex, and oriented to longitudinally run at least partially between the front side and back side of the firebox. Further, each of the hollow tubes 225 may have a plurality of apertures 230. The plurality of apertures 230 are configured to allow airflow traveling through each air tube 225 to exit the tube and enter the chamber of the firebox 110 for use in fuel combustion, as discussed in more detail below. In the depicted embodiment, the apertures 230 of the center tube 235 are positioned in five rows as shown in FIG. 8; two lateral-facing rows on a substantially horizontal plane through the center axis of the tube 235, one downward-facing row on a substantially vertical plane through the center axis of the tube 235, and two rows positioned in between the downward row and each of the lateral rows, respectively (e.g., at approximately 45° between the horizontal and vertical planes). In the depicted embodiment, each lateral tube of the plurality of tubes 225 arranged in the inverted V shape configuration have a single row of apertures 230 positioned on a substantially horizontal plane through the center axis of each tube and facing laterally toward the center of the firebox. One skilled in the art will recognize that many different embodiments are possible concerning the number and arrangement of the plurality of tubes 225 extending across the firebox 110. In the depicted embodiment, the plurality of tubes comprise six lateral tubes having a 1 inch diameter and a center tube having a 3 inch diameter arranged in an inverted V shape configuration. Of course, the number, size and arrangement of the tubes may be appropriately modified and adapted for different stoves and fireboxes, and the disclosure is not intended to be limited to the specific embodiment illustrated. Likewise, many different arrangements of the plurality of apertures 230 are possible for providing sufficient airflow into the firebox, and the present disclosure is not intended to be limited to the specific embodiment illustrated.

The described airflow apparatus 200 allows for uniform distribution of incoming airflow into the top of the firebox 110. The equalization of pressure across the plurality of tubes 225 and between the plenums 205, 210 facilitates such effective use multiple of airflow pathways through the apertures 230 across both the width and length of the firebox 110. Further, airflow apparatus 200 may be made of a material with good heat conduction properties, such that elements thereof (e.g., plenums, tubes) are heated within the firebox and provide further preheating of incoming airflow before combustion. It should be appreciated that the geometries of the various components comprising the airflow apparatus and the openings therethrough may be modified to optimize draft capacity and/or the amount of preheating for a particular stove application.

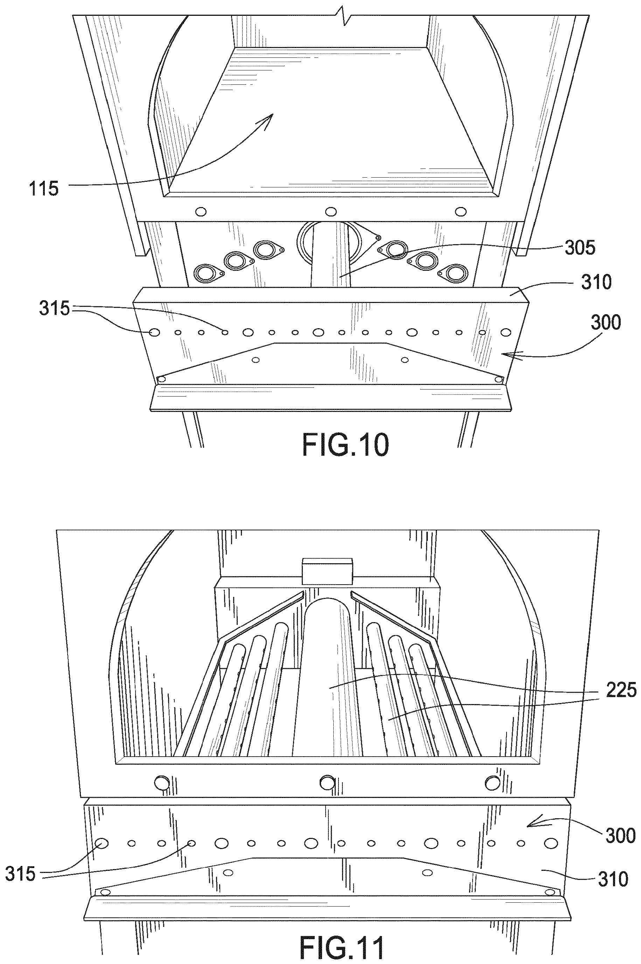

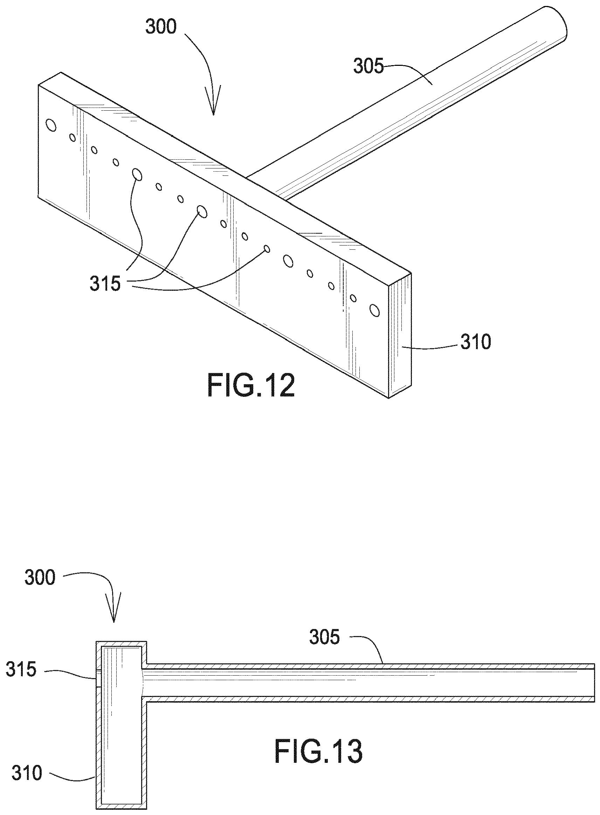

Turning to FIGS. 9-13, an airflow apparatus according to the present disclosure further comprises an airwash component. FIG. 9 shows the front plenum 210 and front plate 220 of an airflow apparatus positioned within a wood-burning appliance, but no airwash component. Referring to the embodiments of FIGS. 10-13, airwash component 300 comprises a primary airwash tube 305 and a compartment 310. The primary airwash tube 305 is hollow to allow for an airflow pathway through it. Unlike tubes 225, however, the primary airwash tube 305 does not have apertures along its length since airflow is to be guided directly from the gap 135 in the stove wall, across the firebox 110, to the front side of the stove. The primary airwash tube 305 may be a single tube positioned within one of the plurality of tubes 225 (see FIGS. 10 and 11), for instance the center tube 235 located at the apex of an inverted V shape arrangement for the plurality of tubes. Since the airwash tube 305 is positioned within a tube 225, it shares the same longitudinal orientation between the front side and back side of the firebox. The diameter of tube 225 surrounding primary airwash tube 305 may be larger than the other tubes 225 so as accommodate the airwash tube 305 therein, and still be able to provide its own airflow pathway to the chamber of firebox 110. In the depicted embodiment, the primary airwash tube 305 has a diameter of 2 inches and is configured in the center tube 235 of the plurality of tubes 225, the center tube having a diameter of 3 inches. Of course, the size of the primary airwash tube and the center tube may be modified for a particular application given the airflow requirements of a stove and spatial limitations within the firebox. The primary airwash tube 305 may have an airflow pathway that extends from the gap 135 of the stove wall to the compartment 310. Therefore, primary airwash tube 305 may have a separate incoming airflow pathway from the gap 135 as compared to back plenum 205.

As seen in FIGS. 10 and 11, when airwash component 300 is placed in position, compartment 310 is configured to at least partially fit within the front plenum 210. The compartment 310 may have a box-like construction and be coupled to primary airwash tube 305, such that the airwash component 300 comprises both compartment 310 and primary airwash tube 305. The front side of compartment 310 is provided with at least one opening, as illustrated by openings 315. Therefore, incoming airflow entering the back end of the primary airwash tube 305 is directed to the compartment 310 and out the at least one opening 315 facing the front of firebox 110. The compartment 310 is positioned over the door 125 and the relatively cooler air-compared to the rest of the firebox when in use-flows downward over the glass surface of the door (in the depicted embodiment) from the at least one opening 315, thereby reducing and/or preventing the effects of overheating and particle deposit on the door surface.

It should be appreciated that more than one primary airwash tube may be arranged in the airwash component, and may or may not be positioned within a corresponding air tube. In that sense, a plurality of primary airwash tubes may facilitate aerodynamic communication between the gap of the back stove wall and the compartment of the airwash component. Likewise, the precise arrangement of openings on the front side of the compartment which provide the airflow pathway to the door may be modified over the depicted embodiments, and still within the scope of the present disclosure.

As seen in FIGS. 9-11, the airwash component 300 may be slidably mounted within one of the plurality of tubes 225. When the door is at least partially removed as described further below, then, the airwash component 300 is readily accessible by a user for cleaning and maintenance. Moreover, as shown in FIG. 9, the plurality of tubes may each comprise a face plate 240 at an end mounted to front plate 220 via a screw or any other acceptable couplings 245, for example bolts, in the front plenum 210. Therefore, when the airwash component is removed, each of the plurality of tubes may also be removed from the airflow apparatus and stove for easy cleaning and maintenance. In such an embodiment, the plurality of tubes are not firmly bonded to the back plate 215 (or front plate 220) in order to allow the tubes to be uncoupled from the front plate 220 and each be slidably removed from the airflow apparatus. With the plurality of tubes removed, it is also more convenient to clean and maintain the top of the firebox and/or baffle plates described below. Further, this disassembly does not require a complicated process or specialized tools allowing ordinary users to self-service their wood-burning appliances according to the present disclosure.

Turning to the embodiment of FIGS. 14 and 15, baffle plates are used to direct exhaust in a wood-burning appliance according to the present disclosure. Baffle plates 400 may be positioned at the top of the firebox to direct the exhaust through an exit pathway between the baffle plates. In the depicted embodiment, the baffle plates 400 are positioned over the airflow apparatus and angled to correspond to the inverted V shape configuration of the plurality of tubes 225 running through the firebox. Another set of baffle plates 410 may be provided which lie directly on top of the three lateral tubes of the plurality of tubes 225 on each side. In other embodiments (not shown), baffle plates 400 may be positioned directly on top of the lateral tubes of the plurality of tubes 225 and be bent upward at their ends above the center tube 235 to form a similar configuration for the slot therebetween shown in FIG. 15. In such embodiments, the second set of baffle plates 410 is not necessary. Heated exhaust rises through the firebox after combustion, at which point baffle plates 400, 410 direct the exhaust to an exit pathway-the slot formed at the apex of the angled baffle plates in the illustrative embodiment. At this point, exhaust hits the bottom of the oven 115 and is directed through an oven exhaust cavity 405 formed between the outer sidewalls of the stove 105 and the inner sidewalls of the oven 115, before exiting through the flue.

With the previous discussion of structural configuration in mind, a possible airflow pathway through a stove according to the present disclosure is now described. When the firebox begins to heat (e.g., wood is burning therein), it has a lower pressure relative to environmental pressure. This creates a draft causing air to enter the air intake from outside of the stove. After passing through the air intake, the airflow travels through the gap in the back wall of the stove. The air is preheated by heat radiating from the firebox while in the gap, which improves combustion efficiency. The airflow may then enter the airflow apparatus through either the back plenum or the primary air wash tube(s).

When the airflow enters the primary airwash tube from the stove wall gap, the airflow will traverse the firebox and exit into the compartment of the airwash component, before continuing out through the one or more openings on the front side of the compartment. Therefore, the airwash component provides a primary airflow pathway from the gap in the stove wall to the front side of the firebox. Due to the positioning of the openings of the compartment within the firebox, the supply of exiting air will flow downward over the door before moving to a burn site for combustion. This is because the preheated airflow is still relatively cooler than the remainder of the firebox, which is heated from the fuel combustion. The airflow is then drawn to a burn site in the firebox for primary combustion of the fuel. After being used in combustion, the airflow will then rise to the top of the firebox. As described below, secondary combustion may occur at this point due to incoming airflow through the plurality of tubes providing a supply of oxygen. The exhausted airflow is funneled by the angled baffle plates as it rises to an exit opening or slot in the center of the top side of the firebox. The slot formed between the one or more baffle plates is positioned above the center tube of the plurality of tubes in the depicted embodiment, which is also the apex of the inverted V-shape configuration of the plurality of tubes. In embodiments having an oven chamber above the firebox, the airflow will then hit the bottom of the oven and be directed around the perimeter of the oven in cavities created between the oven sidewalls and the outer sidewalls of the stove. Heat exchange occurs as the exhaust travels through these cavities. Finally, the exhaust will exit through the outlet/flue located at the top of the stove.

When the airflow enters the back plenum from the stove wall gap, it continues through the plurality of tubes and then may exit through one of the apertures directly into the firebox, or continue to the front plenum for pressure equalization and recycling through the tubes until eventually exiting through one of the apertures. The unused airflow exiting the apertures is met by rising exhaust from the primary fuel combustion described above. The additional oxygen supplied by the plurality of tubes at the top of the firebox may then be consumed in a secondary reaction to burn of any incompletely-combusted matter in the rising exhaust. The inverted V shape arrangement of the plurality of tubes, and angled baffle plates positioned above the tubes and forming an exit slot above the larger center tube, forces the exhaust flow past the tubes before exiting through the slot and thus maximizes the secondary combustion. Moreover, the diameter of the center tube at the apex of the plurality of tubes is large enough to itself act as a baffle for rising exhaust, such that secondary combustion flames bend around the tube and do not reach directly up into the slot, further maximizing the occurrence of secondary combustion reactions. After such secondary combustion, the relatively cleaner exhaust will continue to rise to the baffles plates where it is directed out of the firebox and stove as previously described.

A wood-burning appliance having an airflow apparatus according to the present disclosure may provide for a more efficient fuel combustion with emission rates substantially below 4.5 grams of particulate per hour. In preliminary standardized tests, emission rates have been measured between approximately 2.5 and 4.5 grams per hour. In some tests, the emission rates were measured between approximately 2.0 and 2.5 grams per hour. Further yet, emission rates were measured below 2.0 grams per hour and as low as approximately 1.77 grams per hour. A wood-burning appliance with such an airflow apparatus may approach complete combustion of fuel under certain burning conditions.

The increased distance of the airflow exhaust pathway through the one or more oven exhaust cavities around the oven chamber improves heat transfer. Likewise, additional heat exchange occurs since ambient air both inside the oven chamber (through exchange with the inner walls of the oven) and outside the stove (through exchange with the outer walls of the stove) takes on heat from the outgoing exhaust. In a wood-burning appliance according to the present disclosure, preliminary tests have measured the temperature of the exhaust exiting the flue to be significantly reduced, representing improvement in heat utilitzation. For example, the exhaust temperature exiting the flue may be between approximately 600 and 800°F under certain testing conditions. In some tests, the exhaust temperature was measured between approximately 400 and 600°F. Further yet, temperatures have been measured below 400°F and as low as approximately 350°F during testing of the wood-burning appliance. The decreased exhaust temperature also reduces the risk of the flue overheating, which may cause structural damage and increase the risk of fire hazard to the environment.

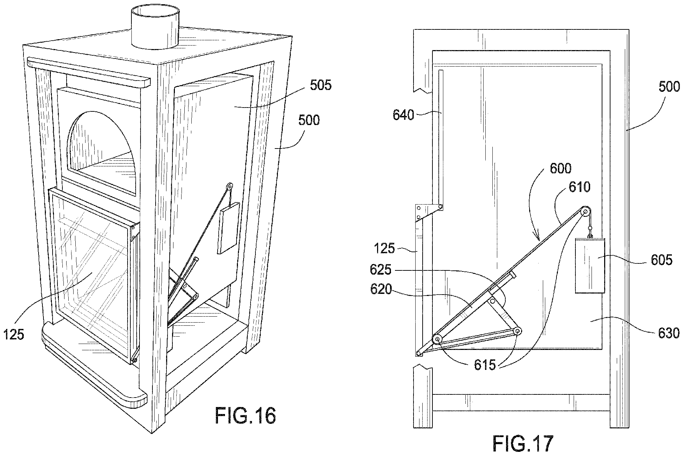

In a further embodiment shown in FIG. 16, the wood-burning appliance may comprise an outer frame 500 which encompasses a stove 505 according to the present disclosure. The outer frame 500 may enhance the ornamental/decorative aspects of the appliance, as well as insulate the surrounding environment from heat radiating from the stove walls, reducing the potential for a fire hazard. Therefore, incorporation of an outer frame 500 may depend on the desired overall use of the appliance. One or more side panels (not shown) may be positioned within the frame covering the sides and/or back of the stove. The side panel may be produced of any non-flammable material, for example tile, brick, soapstone, metal, glass, etc. In some embodiments, outer frame 500 may compliment the preheating of airflow entering stove 505, since incoming airflow must traverse an outer frame pathway as well (e.g., directly through the framework or via spaces formed between the stove 505 and frame 500), which increases exposure of the airflow to heat radiated by stove 505 before reaching an airflow intake of the stove 505. Moreover, the outer wall of the stove 505 forming the gap with the inner wall could instead be formed by, or integrated as part of, the outer frame 500.

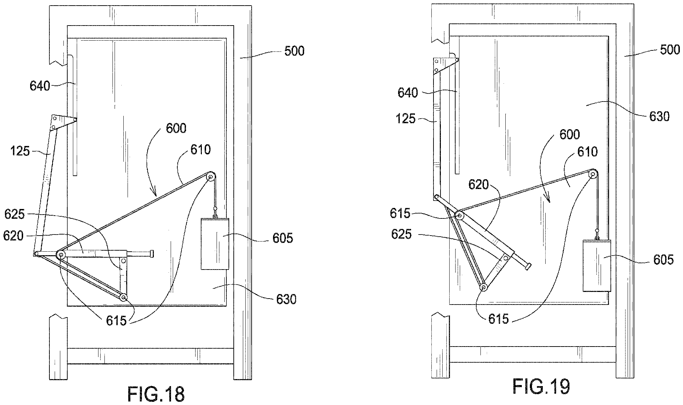

As shown in FIGS. 17-21, certain embodiments of a wood-burning appliance according to the present disclosure may comprise a pulley system 600 for opening/closing the door 125. The depicted embodiment is positioned within a frame 500 as in FIG. 16, with portions of the frame omitted to allow viewing on the pulley system. The pulley system may comprise a weight, a cable, at least one wheel, and at least one arm. In the depicted embodiment, the bottom of door 125 is attached to a first arm 620 and the end of a cable 610, the other end of the cable 610 attached to a weight 605. The first arm 620 is further coupled to a second arm 625. The cable 610 runs through a pulley wheel 615 on each arm, as well as a third pulley wheel 415 formed on the side wall 630 of the firebox which supports the weight 605. In a closed position (see FIG. 17), door 125 is flush with the front edges of the firebox and forms a seal with gaskets (not shown) located thereon, thus preventing fumes from escaping the firebox. The gasket seal (not shown) is mounted on the stove and surrounds the front opening of the firebox, such that when the door is in the closed position, the surface (e.g., glass) of the door and gasket contact each other forming an airtight seal. In such an embodiment, the seal is thus formed within the interior area defined by the outer frame of the door. The top of the door 125 is coupled within a sliding track 640 running vertically along the side wall 630 of the stove. The sliding track 640 may be open at its top. When the bottom portion of door 125 is lifted, rotation and/or extension of the first arm 620 allows the door 125 to pivot outward from a pivot point formed by the sliding track 640 and the top of the door. When door 125 is fully opened (see FIG. 19), the first arm 620 may be positioned so the door 125 is again flush with the vertical. By extending door 125 away from the firebox when moving from the open to closed position and vice versa (see FIG. 18), pulley system 600 reduces wear on gaskets (not shown) between the door and firebox edges, thus helping extend the expected life of those parts. Further, a tighter seal is created between the door and gasket/seals because of the force produced by the weight 605 in the cable 610 acting on the door. Likewise, because of the configuration of the pulley wheels 615 and arms 620, 625, the door is secured in both the open and closed positions. Finally, the pulley weight 605 reduces the effort that a user must exert in raising the door to the open position.

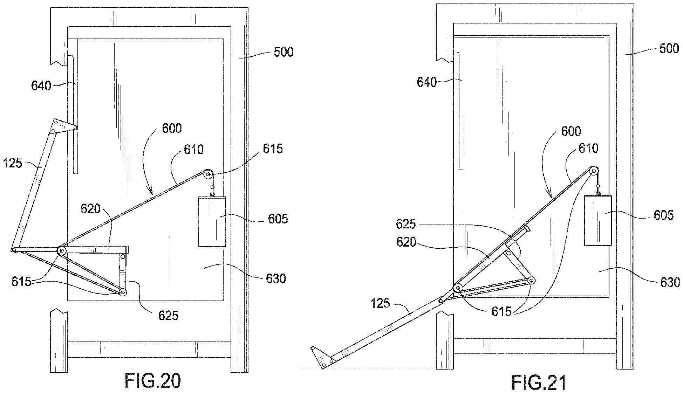

In the depicted embodiment, the first arm 620 is constructed with an outer tube and pin end, which allows the door bottom to be further extended away from the firebox until the pin end hits the outer tube as shown in FIG. 20. In another embodiment (not shown), the first arm may be constructed with one or more slotted recesses and mounted on one or more support members formed on the side wall 630 of the stove, such that the one or more support members are positioned within the one or more slotted recesses, thereby allowing movement of the arm along the length of the slotted recesses with respect to the stove and thus the door bottom to be further extended away from the firebox. The tension of the wire cable 610 on the door generated by the weight 605 prevents the further extension of the first arm 620 absent manipulation by a user. Where the sliding track 640 is open at its top side, the further extension of the first arm 620 allows the top portion of the door that is coupled within the sliding track to be lifted completely out of the sliding track by a user. The door may then be laid on the hearth in front of the stove which facilitates easier cleaning and maintenance of the inside of the door, as shown by FIG. 21. Moreover, in this position of the door the airflow apparatus 200 is fully accessible by a user. The airwash component 300 may be removed from the front plenum 210 and from within the plurality of air tubes (see FIGS. 9 & 10) for cleaning and maintenance. Moreover, each individual tube of the plurality of tubes may be removed from the wood-burning appliance for cleaning and maintenance, for instance by unscrewing a screw or bolt 245 which couples an end plate 240 of each tube to the front plate 220 in the front plenum 210 (see FIG. 9), without having to disassemble the entirety of the airflow apparatus from the stove. Removal of the tubes also simplifies cleaning of the interior of the firebox. In this way, a user may easily maintain a glass door, airwash component, front plenum, each of the plurality of tubes, and firebox in a few steps and without a complicated deconstruction process or the need for more than household tools.

While a number of aspects and embodiments have been discussed, those of skill in the art will recognize certain modifications, permutations, additions and sub-combinations are possible. It is intended that the following claims are interpreted to include all such modifications, permutations, additions and sub-combinations, as they are within the true spirit and scope of the present disclosure and the claims. Each embodiment described herein has numerous equivalents.

Claims to this device could include:

A wood-burning appliance having a stove, the stove comprising:
a firebox having a front side and a back side opposite the front side, the back side having an inner wall and an outer wall, the outer wall having an air intake,
wherein a gap is formed between the inner wall and the outer wall, the gap configured to preheat an incoming airflow;
an oven positioned above the firebox; and
a flue aerodynamically connected the oven;
wherein a door is configured to enclose the front side of the firebox when in use; and
wherein an airflow apparatus is positioned inside the firebox, the airflow apparatus comprising:
   a plurality of tubes oriented to at least partially extend between the front side and the back side of the firebox, the plurality of tubes generally configured in an inverted V shape, the plurality of tubes in aerodynamic communication with the gap, the plurality of tubes each having a plurality of apertures aerodynamically connected to the firebox; and
   an airwash component in aerodynamic communication with the gap and the front side of the firebox, the airwash component at least partially positioned within a tube of the plurality of tubes.

The wood-burning appliance of any one of the above claims, wherein the airwash component provides airflow to the firebox for a primary combustion of fuel.

The wood-burning appliance of any one of the above claims, wherein the plurality of tubes provide airflow to the firebox for a secondary combustion of fuel.

The wood-burning appliance of any one of the above claims, wherein the airwash component comprises a primary airwash tube and a compartment, the primary airwash tube positioned at least partially within the center tube of the plurality of tubes, and the compartment having at least one opening.

The wood-burning appliance of any one of the above claims, wherein one or more baffle plates are positioned above the airflow apparatus in the firebox and configured to direct exhaust out of the firebox through a slot positioned above the center tube of the plurality of tubes, the slot at least partially extending between the front side and the back side of the firebox.

The wood-burning appliance of any one of the above claims, wherein the wood-burning appliance has an emission rate less than 4.5 grams per hour.

The airflow apparatus of any one of the above claims, wherein the emission rate is less than approximately 2.5 grams per hour.

The airflow apparatus of any one of the above claims, wherein the emission rate is less than approximately 1.8 grams per hour.

The wood-burning appliance of any one of the above claims, wherein the wood-burning appliance approaches complete combustion of fuel when in operation.

The wood-burning appliance of any one of the above claims, wherein at least one oven exhaust cavity is formed between the oven and one or more side walls of the stove, the at least one oven exhaust cavity providing aerodynamic communication between the firebox and the flue.

The wood-burning appliance of claim 1, wherein the oven acts as a heat exchanger during operation and exhaust exiting the flue has a temperature of less than approximately 450°F.

The wood-burning appliance of any one of the above claims, wherein the temperature is less than approximately 350°F.

The wood-burning appliance of any one of the above claims, further comprising an outer frame at least partially surrounding the stove.

An airflow pathway through the wood-burning appliance of any one of the above claims, comprising:
the air intake of the outer wall of the firebox;
the gap between the inner wall and the outer wall of the firebox;
the airwash component;
the first side of the firebox;
a primary combustion site in the firebox; and
the flue;
wherein increasing temperature within the firebox sets the airflow pathway in motion; and
wherein the airflow pathway provides oxygen for primary combustion of fuel within the firebox.

An airflow pathway through the wood-burning appliance of any one of the above claims, comprising:
the air intake of the outer wall of the firebox;
the gap between the inner wall and the outer wall of the firebox;
a back plenum of the airflow apparatus;
the plurality of tubes of the airflow apparatus;
the plurality of apertures of the plurality of tubes;
a secondary combustion site in the firebox; and
the flue;
wherein increasing temperature inside the firebox sets the airflow pathway in motion; and
wherein the airflow pathway provides oxygen for secondary combustion of exhaust rising within the firebox.

A pulley system for the door of the wood-burning appliance, the pulley system comprising:
a weight;
a cable having a first end coupled to the door and a second end coupled to the weight;
a first arm and a second arm pivotally mounted on a side wall of the stove, the first arm coupled to the door, and
a plurality of wheels supporting the cable, at least one of the plurality of wheels positioned on each of the first arm, the second arm, and the side wall of the stove.

The pulley system of any one of the above claims, wherein a bottom edge of the door is configured to extend away from the stove via pivoting of the first arm when the door is lifted between a closed position and an open position and back again.

The pulley system of any one of the above claims, wherein the first arm is constructed to extend further away from the stove when the door pulled outward by a user.

The pulley system of any one of the above claims, wherein a top of the door can be removed from a sliding track located on the side wall of the stove.

An airflow apparatus positioned within a firebox for a wood-burning stove, the airflow apparatus comprising:
a first plate forming a back plenum, the back plenum configured to receive an incoming airflow;
a second plate forming a front plenum;
a plurality of hollow tubes extending between the first plate and the second plate and oriented to at least partially extend between a front side and a back side of a firebox, the plurality of tubes generally positioned in an inverted V shape configuration, the plurality of tubes in aerodynamic communication with the back plenum and the front plenum, the plurality of tubes each having a plurality of apertures; and
an airwash component comprising:
   a hollow airwash tube positioned at least partially within a center tube of the plurality of air tubes, the airwash tube configured to receive the incoming airflow; and
   a compartment positioned at least partially within the front plenum, the compartment having at least one opening, the compartment in aerodynamic communication with the airwash tube;
wherein the airflow apparatus is configured to provide airflow to a firebox through the at least one opening of the compartment for a primary combustion reaction;
wherein the airflow apparatus is configured to provide airflow to a firebox through the plurality of apertures of the plurality of hollow tubes for a secondary combustion reaction; and
wherein the center tube of the plurality of tubes is configured to be positioned beneath a slot at least partially extending between a front side and a back side of a firebox for exiting exhaust.

The airflow apparatus of claim 20, wherein a wood-burning stove having the airflow apparatus installed produces an emission rate lower than 4.5 grams per hour.

The airflow apparatus of any one of the above claims, the emission rate is less than approximately 2.5 grams per hour.

The airflow apparatus of any one of the above claims, the emission rate is less than approximately 1.8 grams per hour.

The airflow apparatus of any one of the above claims, wherein a wood-burning stove having the airflow apparatus installed approaches complete combustion of fuel in operation.

The terms and expressions which have been employed are used as terms of description and not of limitation, and there is no intention in the use of such terms and expressions to exclude any equivalents of the features shown and described or portions thereof, but it is recognized that various modifications are possible within the scope of the invention claimed. Accordingly, it should be understood that although the invention has been specifically disclosed by selected embodiments and optional features, modification and variation of the concepts herein disclosed may be resorted to by those skilled in the art, and that such modifications and variations are considered to be within the scope of this invention as defined by the appended claims. Whenever a range is given in the specification, all intermediate ranges and subranges, as well as all individual values included in the ranges given are intended to be included in the disclosure. When a Markush group or other grouping is used herein, all individual members of the group and all combinations and sub-combinations possible of the group are intended to be individually included in the disclosure.

In general, the terms and phrases used herein have their art-recognized meaning, which can be found by reference to standard texts, journal references and contexts known to those skilled in the art. The above definitions are provided to clarify their specific use in the context of the invention.

### LIST OF REFERENCE NUMERALS

100 - wood-burning appliance
105 - stove
110 - firebox
115 - oven
120 - flue
125 - door
130 - air intake
135 - gap
140 - outer wall
145 - inner wall
150 - gasket
200 - airflow apparatus
205 - first/back plenum
210 - second/front plenum
215 - first/back plate
220 - second/front plate
225 - plurality of tubes
230 - plurality of apertures
235 - center tube of the plurality of tubes
240 - face plates
245 - coupling
300 - airwash component
305 - primary airwash tube
310 - compartment
315 - at least one opening
400 - first set of baffle plates
405 - oven exhaust cavity
410 - second set of baffle plates
500 - outer frame
505 - stove
600 - pulley system
605 - weight
610 - cable
615 - wheels
620 - first arm
625 - second arm
630 - side wall of firebox
640 - sliding track

## Claims

1. A wood-burning appliance having a stove, the stove comprising:
a firebox having a front side and a back side opposite the front side, the back side having an inner wall and an outer wall, the outer wall having an air intake,
wherein a gap is formed between the inner wall and the outer wall, the gap configured to preheat an incoming airflow;
an oven positioned above the firebox; and
a flue aerodynamically connected the oven;
wherein a door is configured to enclose the front side of the firebox when in use; and
wherein an airflow apparatus is positioned inside the firebox, the airflow apparatus comprising:
a plurality of tubes oriented to at least partially extend between the front side and the back side of the firebox, the plurality of tubes generally configured in an inverted V shape, the plurality of tubes in aerodynamic communication with the gap, the plurality of tubes each having a plurality of apertures aerodynamically connected to the firebox; and
an airwash component in aerodynamic communication with the gap and the front side of the firebox, the airwash component at least partially positioned within a tube of the plurality of tubes.

2. The wood-burning appliance of claim 1, wherein the airwash component provides airflow to the firebox for a primary combustion of fuel.

3. The wood-burning appliance of any one of the above claims, wherein the plurality of tubes provide airflow to the firebox for a secondary combustion of fuel.

4. The wood-burning appliance of any one of the above claims, wherein the airwash component comprises a primary airwash tube and a compartment, the primary airwash tube positioned at least partially within the center tube of the plurality of tubes, and the compartment having at least one opening.

5. The wood-burning appliance of any one of the above claims, wherein one or more baffle plates are positioned above the airflow apparatus in the firebox and configured to direct exhaust out of the firebox through a slot positioned above the center tube of the plurality of tubes, the slot at least partially extending between the front side and the back side of the firebox.

6. The wood-burning appliance of any one of the above claims, wherein at least one oven exhaust cavity is formed between the oven and one or more side walls of the stove, the at least one oven exhaust cavity providing aerodynamic communication between the firebox and the flue.

7. An airflow pathway through the wood-burning appliance of any one of the above claims, comprising:
the air intake of the outer wall of the firebox;
the gap between the inner wall and the outer wall of the firebox;
the airwash component;
the first side of the firebox;
a primary combustion site in the firebox; and
the flue;
wherein increasing temperature within the firebox sets the airflow pathway in motion; and
wherein the airflow pathway provides oxygen for primary combustion of fuel within the firebox.

8. An airflow pathway through the wood-burning appliance of any one of the above claims, comprising:
the air intake of the outer wall of the firebox;
the gap between the inner wall and the outer wall of the firebox;
a back plenum of the airflow apparatus;
the plurality of tubes of the airflow apparatus;
the plurality of apertures of the plurality of tubes;
a secondary combustion site in the firebox; and
the flue;
wherein increasing temperature inside the firebox sets the airflow pathway in motion; and
wherein the airflow pathway provides oxygen for secondary combustion of exhaust rising within the firebox.

9. A pulley system for the door of the wood-burning appliance of any one of the above claims, the pulley system comprising:
a weight;
a cable having a first end coupled to the door and a second end coupled to the weight;
a first arm and a second arm pivotally mounted on a side wall of the stove, the first arm coupled to the door, and
a plurality of wheels supporting the cable, at least one of the plurality of wheels positioned on each of the first arm, the second arm, and the side wall of the stove.

10. The pulley system of any one of claim 9, wherein a bottom edge of the door is configured to extend away from the stove via pivoting of the first arm when the door is lifted between a closed position and an open position and back again.

11. The pulley system of one of claims 9 or 10, wherein the first arm is constructed to extend further away from the stove when the door pulled outward by a user.

12. The pulley system of one pf claims 9 to 11, wherein a top of the door can be removed from a sliding track located on the side wall of the stove.
